**Europäisches Patentamt**

**European Patent Office**

**Office européen des brevets**

(19)

(11) **EP 1 315 056 A2**

(12) **EUROPEAN PATENT APPLICATION**

(43) Date of publication:
28.05.2003 Bulletin 2003/22

(51) Int Cl.⁷: **G05B 19/4069**

(21) Application number: 02257676.3

(22) Date of filing: 06.11.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 12.11.2001 JP 2001346640

(71) Applicant: **FANUC LTD**
**Minamitsuru-gun, Yamanashi 401-0597 (JP)**

(72) Inventors:
• **Watanabe, Atsushi**
**Suginami-ku, Tokyo 168-0072 (JP)**
• **Nagatsuka, Yoshiharu,**
**Fanuc Dai3virakaramatsu**
**Minamitsuru-gun, Yamanashi, 401-0511 (JP)**

(74) Representative: **Billington, Lawrence Emlyn**
**Haseltine Lake & Co.**
**Imperial House**
**15-19 Kingsway**
**London WC2B 6UD (GB)**

(54) **Simulation apparatus for working machine**

(57)     The layout of a three-dimensional model (46) of a peripheral object (43), such as a table and a workpiece, is provided on a screen (44) of a simulation apparatus, together with a three-dimensional model (45) of a robot (41) or the like. Point arrays, segments and planes or the like of the models (45, 46) are specified to prepare working point arrays for producing an operation program, thereby providing a simulation of the models (45, 46) in accordance with data of the program. A three-dimensional visual sensor (42) is mounted on the robot (41) to detect the layout of the actual peripheral object (43), thereby correcting a mismatch, if any, between the layout of the models (45, 46) and that of the actual peripheral object (43).

FIG. 3

(a)

(b)

**EP 1 315 056 A2**

## Description

This invention relates to a simulation apparatus for performing a simulation of a working machine such as a robot and a machine tool, and more particularly, to a simulation apparatus, which provides a simulation by matching a model used in the simulation with an actual system through the use of a sensor.

In a case where programs for a working machine such as a robot are prepared by an off-line programming system, it is usual that such programs include errors. For this reason, these programs are usually corrected by providing a touchup to a workpiece (an object to be worked) in an actual system. In another correction method, a vision sensor or the like has been used as means for detecting three points, by which a position and an orientation of the workpiece are determined, to shift the entirety of the program.

Moreover, if the program corrected through the touchup or shifting processing is reentered into the off-line programming system, a working point in the program for the working machine such as the robot tends to shift frequently with respect to a working point of the workpiece in an image generated by the off-line programming system on the screen by an amount of touchup. To cope with this, on-screen layout in the off-line programming system is shifted using touchup information.

Incidentally, in a case where an off-line simulation is performed for a system composed of the working machine such as the robot and the machine tool and peripheral objects such as the peripheral equipment and workpiece, a simulation apparatus such as a personal computer needs to be used to prepare three-dimensional models of the working machine and the peripheral objects (such as the peripheral equipment and the workpiece). Thereafter, the three-dimensional models also need to be matched with the actual system with regard to the layout or the like.

In such a matching process, the three-dimensional models prepared by the simulation apparatus are disposed on the same positions as those of corresponding components in the actual system to create three-dimensional models of the actual system on a screen of the simulation apparatus. However, such matching process is time-consuming.

Specifically, the conventional simulation techniques have been involving various processes such as a process for performing an off-line programming to be performed in an office or the like separate from a working site; a process in a factory site for installing and adjusting a sensor for detecting the positions or orientations of the working machine such as the robot, the peripheral equipment and the workpiece; a process for providing a touchup or shifting to the working points required for matching between the off-line programming result and the actual system; and a process for incorporating the result of the touchup and shifting of the working points into the contents of the off-line programming.

However, implementation of the above processes requires a lot of time, and thus has prevented a way by which the program for the working machine such as the robot is easily prepared in a short period of time. In other words, there has been no simulation apparatus, which provides consistent matching to a series of simulation processes beginning from a process for off-line programming through a process for configuration matching between the off-line programming result and the actual system, as well as a process for touchup and shifting to a process for readjustment on the off-line programming result.

It is an object of the present invention to provide a simulation apparatus, by which three-dimensional models of an actual system to be simulated may be accurately configured to provide an off-line simulation thereof.

A simulation apparatus according to a first aspect of the present invention can perform a simulation of an actual system by combining a three-dimensional model of a working machine such as a robot and a machine tool with a three-dimensional model of a peripheral equipment or workpiece placed on the periphery of the working machine to display the combination of the above three-dimensional models in the form of animation on a screen of the simulation apparatus. The simulation apparatus comprises means for disposing three-dimensional models on a screen; means for detecting, through a sensor, each of positions of the actual peripheral equipment or workpiece, which correspond to one or more feature portions of any three-dimensional model disposed on the screen; means for calculating a relative positional relation between the working machine and the peripheral equipment or workpiece on the basis of each of the detected corresponding positions; and means for correcting the layout of the above model on the screen on the basis of the calculated relative positional relation.

A simulation apparatus according to a second aspect of the present invention is provided by attached claim 2.

The working machine may be moved to such a position that each of the positions of the actual peripheral equipment or workpiece, which correspond to one or more feature portions of any three-dimensional model provided on the screen, may be captured by the sensor mounted to the working machine, when the sensor is used to detect each of the corresponding positions.

The simulation apparatus may further comprise means for adjusting working point array information of the working machine on the basis of the calculated relative positional relation, to thereby allow working points of the program for the working machine to correspond to those of the actual peripheral equipment or workpiece.

The simulation apparatus may further comprise means by which a change of operation or addition/change of working points of the working machine on the screen of the simulation apparatus is linked with a change of operation or addition/change of working points of the actual working machine.

The screen of the simulation apparatus may display a drawing for supporting the manipulation of the working machine to support the change of operation or addition/change of working points of the actual working machine.

The sensor used in the simulation apparatus may be any one of a two-dimensional visual sensor, a three-dimensional visual sensor and a distance sensor.

The foregoing and other features will become apparent from the following description of preferred embodiments of the invention with reference to the accompanying drawings, in which:

Fig. 1 is a block diagram showing the configuration of main components of a simulation apparatus used in each of embodiments according to the present invention;

Fig. 2 is a flowchart showing the outline of a procedure in a first embodiment according to the present invention;

Figs. 3A and 3B illustrate the first embodiment according to the present invention in a case of measuring the layout of an actual object (Fig. 3A) to use the result of measurement for correction of the layout of the object on a screen (Fig. 3B);

Fig. 4 illustrates the first embodiment according to the present invention in a case of using a two-dimensional sensor to measure the layout of an actual object;

Figs. 5A and 5B illustrate the first embodiment according to the present invention in a case of measuring a plurality of objects (Fig. 5A) to use the result of measurement for correction of a relative positional relation (Fig. 5B) on a screen;

Figs.6A and 6B illustrate the first embodiment according to the present invention in a case of measuring the layout (Fig. 6A) of an actual object by a distance sensor to use the result of measurement for correction of the layout (Fig. 6B) of the object on a screen;

Fig. 7 illustrates the relevant configuration in a case of using a three-dimensional visual sensor according to the present invention;

Fig. 8 illustrates the outline of configuration and operations of the three-dimensional visual sensor;

Fig. 9 illustrates slit laser beams emitted from a projection part of the three-dimensional visual sensor;

Fig. 10 is a flowchart summarizing a procedure in a second embodiment according to the present invention; and

Fig. 11 is a flowchart summarizing a procedure in a third embodiment according to the present invention.

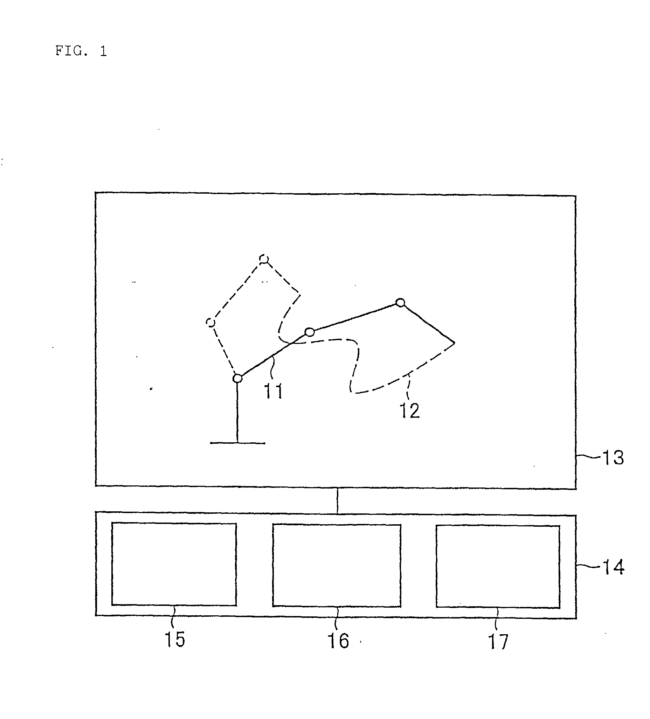

Fig. 1 is a block diagram showing the configuration of main components of a simulation apparatus according to the present invention. As shown in Fig. 1, the entirety of the simulation apparatus comprises a display part providing a display screen 13 and a main body part 14. The main body part 14 is equipped with an animation calculation display unit 15, a data storage unit 16 and a processing unit 17 for an operation of a working machine.

Although not illustrated in Fig. 1, the above parts of the simulation apparatus are provided with optional components such as a keyboard and a mouse for manual operations such as editing, correction and input of program data, parameter data or instructions. Further, in the simulation apparatus, a main CPU (not shown) provides integrated control to each part of the simulation apparatus in accordance with a system program or the like stored in the data storage unit 16. Data transmission/reception over a communication path is performed through an appropriate input/output interface (not shown).

Other program data and parameters or the like required for the processing in each of the following embodiments are stored in the data storage unit 16, and are controlled by the main CPU for their operations such as starting, reading, writing and correction.

A description will now be given of a first embodiment according to the present invention.

Firstly, three-dimensional models of a robot, the peripheral equipment and a workpiece or the like are provided on the screen 13 of the simulation apparatus. Three-dimensional models of the peripheral equipment, the workpiece or the like may be prepared by using two-dimensional drawing data prepared by a CAD apparatus to create three-dimensional data in the simulation apparatus. A three-dimensional model stored in the data storage unit 16, for instance, is available for the three-dimensional model of the robot.

These elements thus provided on the screen 13 of the simulation apparatus assume approximately accurate positions, that is, assume such layout positions that correspond to the layout positions of the actual objects provided in an actual working site or the like (e.g., actual objects such as the robot, the peripheral equipment and the workpiece or dummies thereof).

In reality, however, data error or an on-site layout tuning frequently causes a mismatch between the layout obtained by the simulation apparatus 1 and that of the actual system. Simulation without correcting such a mismatch may cause inaccurate simulation. Thus, in the embodiment, after completion of the placement of the three-dimensional models on the screen of the simulation apparatus 1, a sensor is used to measure the layout of the actual peripheral equipment and workpiece. Then, the layout of the three dimensional models is corrected on the basis of the result of measurement of such components of the actual system. In this way, the first embodiment uses a combination of the measurement of the actual system components with the layout correction based on the result of measurement.

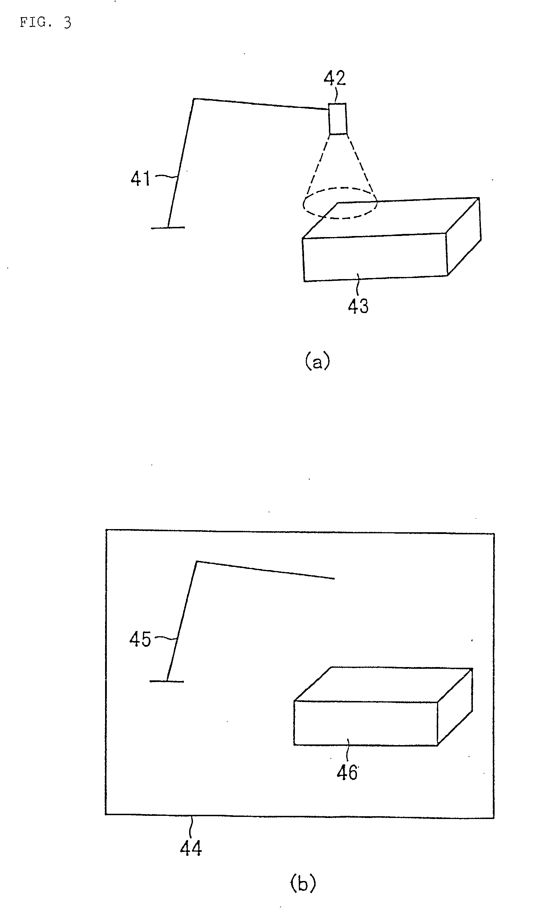

Firstly, as shown in Figs. 3A and 3B, a sensor 42 is mounted to a robot 41 (an actual object), which is a part of a working machine to be simulated, to measure a peripheral object 43 (which is a table in this embodiment), thereby correcting the layout on the screen. Based on the result of this measurement, a display position (e.g., an on-screen layout position) of a three-dimensional model 46 of the table on the screen 44 of the simulation apparatus is corrected. Incidentally, reference numeral 45 denotes a three-dimensional model of the robot. In such a measurement described above, an appropriate sensor such as a two-dimensional sensor, a three-dimensional sensor and a distance sensor may be selected depending on the need.

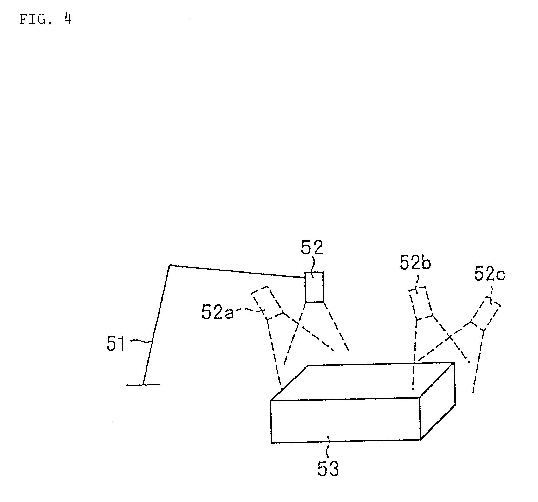

Next, Fig. 4 illustrates the measurement of an actual table 53 by a two-dimensional sensor 52. In this measurement, the robot mounted with the sensor 52 has several different orientations as shown by reference numerals 52a to 52c, so that the table 53 (which may be another peripheral object such as a workpiece) may be measured from a plurality of directions. Data obtained by the measurement from the plurality of directions is subjected to a known principle such as triangulation, for instance, to provide the measurement of the three-dimensional position (including the orientation) of the table 53 (or other peripheral objects). Based on the result of this measurement, the display position (e. g., the on-screen layout position) of the three-dimensional model 46 of the table 53 (or other peripheral objects) on the screen of the simulation apparatus is corrected.

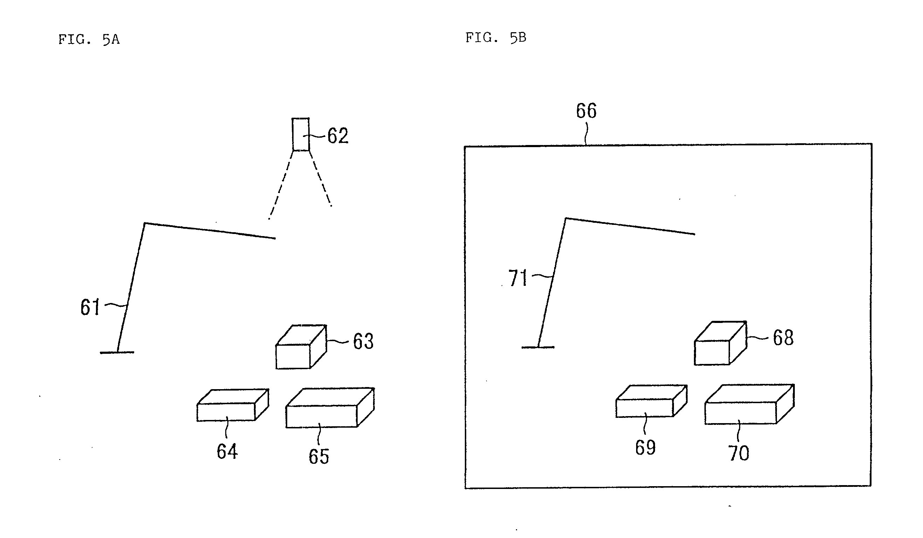

Figs. 5A and 5B illustrate the measurement of three tables (a first table 63, a second table 64 and a third table 65) by a three-dimensional sensor 62 mounted on a robot 61. In this measurement, feature portions such as corners of each of the tables 63 to 65 (or other peripheral objects such as workpiece) are captured by the sensor 62 to measure the three-dimensional position and orientation of each peripheral object (the tables 63 to 65). Details of the above three-dimensional sensor will be described later.

Based on the result of this measurement, the display positions (e.g., the on-screen layout positions) of the three-dimensional models 68 to 70 of the first to third tables 63 to 65 on a screen 66 of the simulation apparatus are corrected. Incidentally, reference numeral 71 denotes a three-dimensional model of the robot 61.

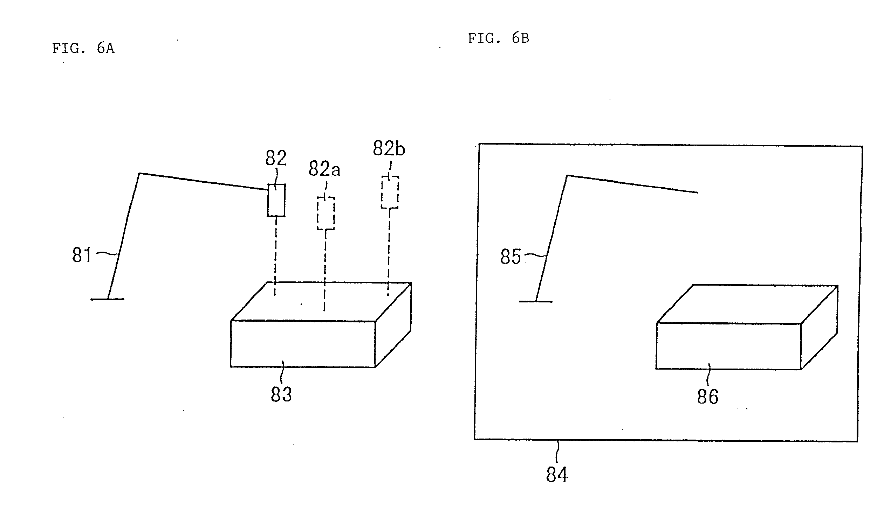

Figs. 6A and 6B illustrate the measurement of a table 83 by a distance sensor 82. In this measurement, a robot 81 mounted with a sensor 82 has several different orientations as shown by reference numerals 82a and 82b so that the table 83 (which may be another peripheral objects such as workpiece) may be measured from a plurality of directions. Data obtained by this measurement from the plurality of directions can provide the three-dimensional position (including the orientation) of the table 83 (or other peripheral objects) based on a known principle. Based on the result of this measurement, the display position (e.g., the on-screen layout position) of a three-dimensional model 86 of the table 83 (or other peripheral objects) on the screen of the simulation apparatus is corrected. Incidentally, reference numeral 85 denotes a three-dimensional model of the robot 81.

As described above, the placement of three-dimensional models is followed by the measurement of the placement of the actual peripheral equipment and workpiece by the sensor to use the result of measurement for correction of the layout of the three-dimensional models. This provides the accurate layout of the three-dimensional models in a system, thereby allowing the system to be accurately simulated. Incidentally, in the measurement as described above, the sensor need not be mounted to the robot to be simulated. The sensor may be mounted to another robot or may be fixed at a fixed position. For instance, in a case where only a simple two-dimensional layout needs to be corrected, a two-dimensional visual sensor may be fixed (at one or more positions) above an operation space of an actual object to be simulated, thereby measuring the layout of the actual object. Alternatively, a plurality of two-dimensional visual sensors may be fixed at different positions with different orientations to provide the same measurement as that of Fig. 4.

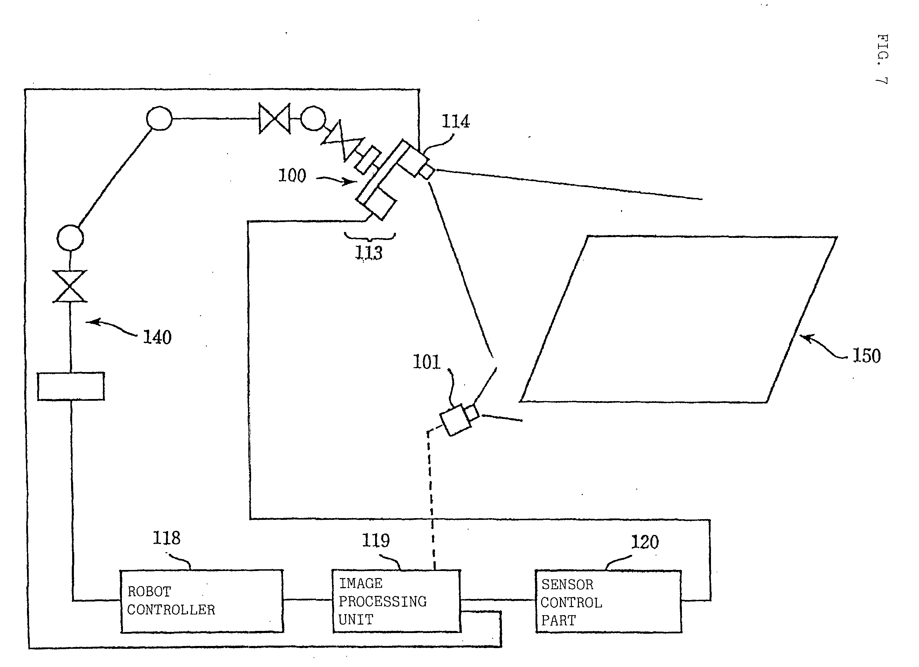

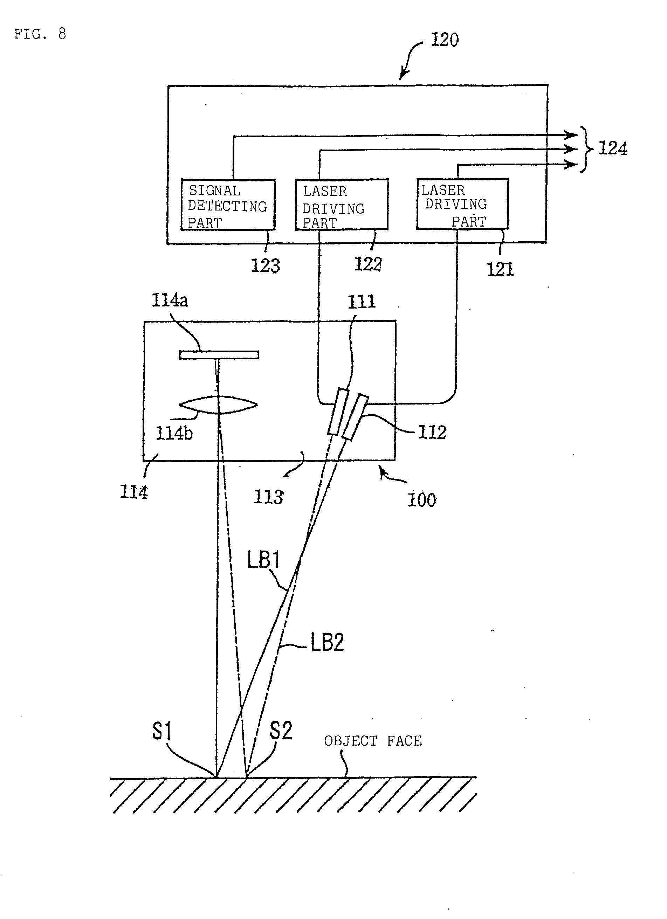

Now, a supplementary description will be given of a case where a three-dimensional visual sensor is mounted to the tip of a robot with reference to Figs. 7 to 9. As shown in Figs. 7 and 8, the entirety of a simulation system according to the present invention comprises a robot controller 118, a robot 140, an image processing unit 119, a laser-used three-dimensional visual sensor 110 and a sensor control part 120.

The robot controller 118 and the image processing unit 119 are both known units, which are equipped with a CPU, a data memory, a frame memory, an image processor, interface and the like. Thus, a detailed description of the configuration and functions or the like of the above two components will be omitted.

The three-dimensional visual sensor 110 measures the three-dimensional position and orientation of an object. There are various types of three-dimensional visual sensors such as a stereo-type one which has a plurality of CCD cameras and one which emits a spot or slit light as a reference light. In the following description, a three-dimensional visual sensor used emits a slit light as a reference light.

The three-dimensional visual sensor 110 is mounted to a wrist part of the robot 140, and is composed of a projection part 113 and a light detection part 114. The projection part 113 has laser oscillators 111 and 112, while the light detection part 114 has a light receiving element 114a and an imaging optical system 114b as shown in Fig. 8. Upon reception of an operation instruction for a laser sensor from the image processing unit 119 through a line 124, laser driving parts 121, 122 drive the laser oscillators 111, 112 to generate laser beams LB1, LB2. The laser beam LB1, LB2 are reflected at reflection points S1, S2 on the face of an object (such as a workpiece or a table provided in an operation space 50) to diffuse to go through the optical system 114b, thereby producing an image on the light receiving element 114a according to the positions of the reflection points S1 and S2. This light receiving element may be a two-dimensional CCD array, for instance.

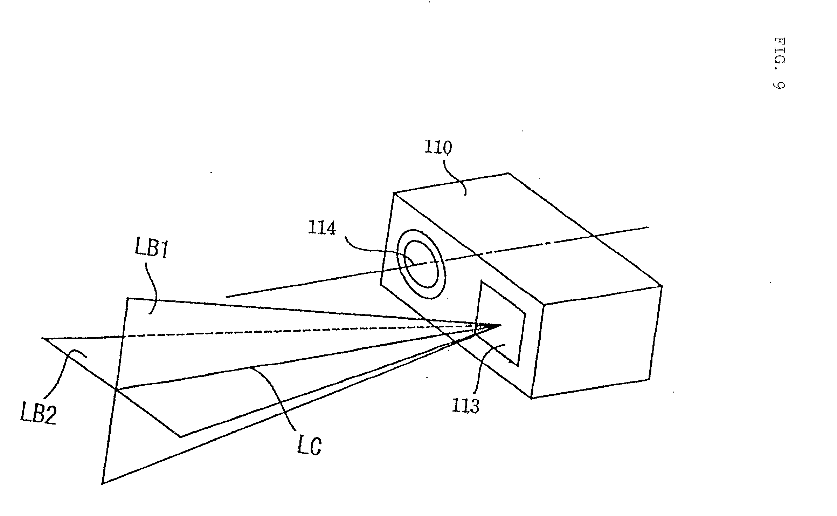

The three-dimensional visual sensor 110 is designed to emit two laser beams. As shown in Fig. 9, the slit laser beams LB1, LB2 define planes respectively, which form a cross-line LC. Prior to the measurement, a well-known calibration method is used to calculate a positional relation between a plane formed by the beams LB1, LB2 or the cross-line LC and the body of the laser sensor. In the measurement, the positions on the light receiving element of the reflection points S1 and S2 of the laser beams are detected by the image processing unit 119. The image processing unit 119 uses the detected positions to calculate, based on a triangulation principle, the three-dimensional positions of the reflections points S1, S2 by using the plane formed by the slit laser beams LB1, LB2 and the reflection points S1, S2 on the light receiving element 114a.

Alternatively, the result of calculation of the positions of a plurality of reflection points may be also used to calculate three-dimensional position and orientation of an object to be measured. In addition, if the positional relation between the three-dimensional visual sensor 110 and the arm tip of the robot 140 is fixed and also known, the position and orientation of the object may be also calculated as a coordinate value that the robot 140 has in a coordinate system space. Since the three-dimensional visual sensor and the operation thereof are well known, their further detailed description will be omitted.

According to the above embodiment, the three-dimensional model or the two-dimensional drawing and the layout information or the like thereof which are already available from the CAD apparatus or the like are sent from the CAD apparatus or the like to the simulation apparatus. This allows the three-dimensional model of the actual system for simulation to be formed speedily with accuracy, thereby providing an off-line simulation of the actual system. Alternatively, two-dimensional configuration information such as a plan drawing available from the CAD apparatus may be also used, without any modification, to prepare a simple two-dimensional model of the object. Furthermore, such two-dimensional configuration information may be also used to prepare a three-dimensional model with ease.

More specifically, the use of two-dimensional configuration information or the three-dimensional model of the robot, the peripheral equipment and the workpiece, which are stored in the CAD apparatus, allows a robot system to be speedily and accurately formed in a virtual space produced on the screen of the simulation apparatus, thereby performing the simulation of the robot system without the need for newly preparing a three-dimensional model for the simulation.

In a case of simulation, which does not need a highly accurate three-dimensional model of an object, a two-dimensional drawing of this object may be directly arranged in the three-dimensional space to prepare a simple three-dimensional model of the object, thereby eliminating the time to prepare the three-dimensional model. In the case where a two-dimensional drawing of an object such as the workpiece is already available from the CAD apparatus, three-dimensional configuration information of the components of the workpiece may be easily obtained from a plane view, a side view and the like provided by the two-dimensional drawing, thereby allowing a three-dimensional model of this workpiece to be prepared speedily with accuracy.

If a layout drawing or the like of a system to be simulated is available from the CAD apparatus, the simulation apparatus may also read such layout information so that the three-dimensional model such as the robot may be provided in a virtual three-dimensional space displayed on the screen of the simulation apparatus in a short period of time with accuracy, thereby providing a simulation expeditiously. Specifically, the simulation apparatus may read a robot working point array obtained from the CAD apparatus to provide a simulation speedily with accuracy without the need for defining the robot working points.

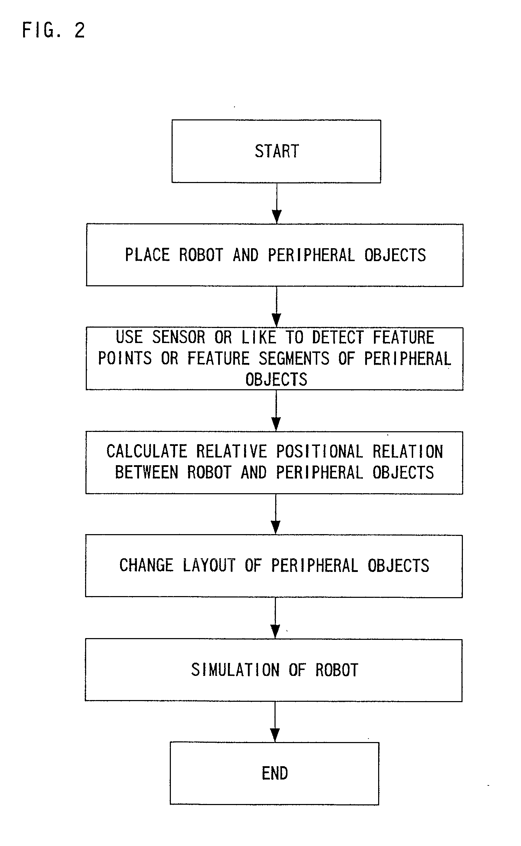

The working point array may be used to complete a robot operation program stored in the simulation apparatus, providing a simulation for operating the three-dimensional model of the robot. The above procedure performed in various cases included according to the first embodiment may be summarized in a flow chart shown in Fig. 2.

A description will now be given of a second embodiment according to the present invention.

As in any one of the cases described above, the positions and orientations of the actual peripheral equipment and workpiece placed around the robot are detected. Based on the result of this detection, a coordinate conversion expression, by which working points and operation points of the robot may be converted, may be measured. This coordinate conversion expression may be mainly used to directly correct the working points or operating points used in the program of the robot. Alternatively, it is also possible to calculate target points by using the coordinate conversion expression when the robot is operated.

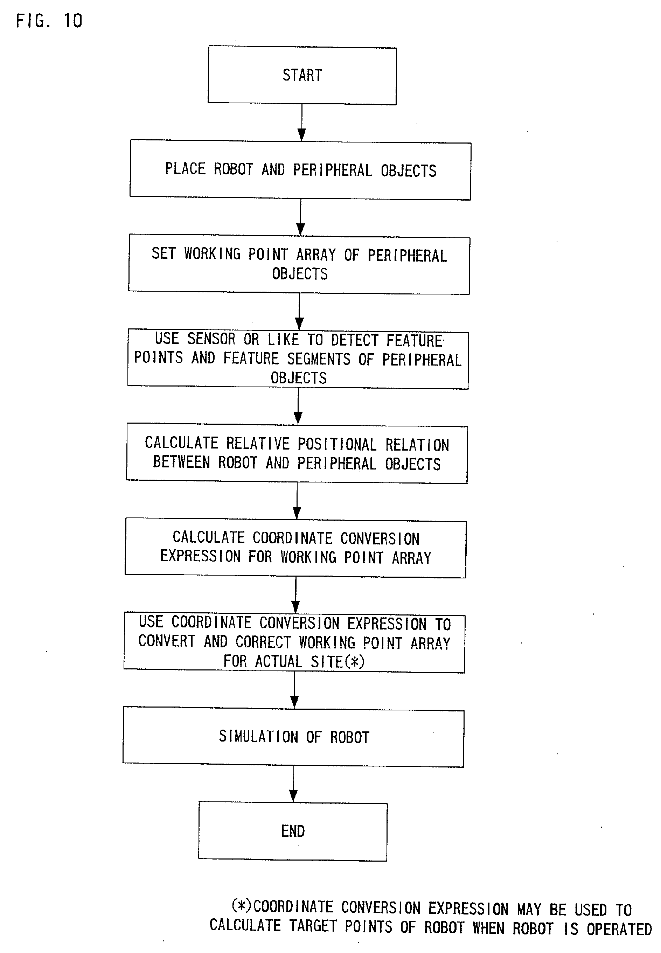

A procedure for correcting the layout by using the coordinate conversion expression, as described above, is summarized in a flow chart of Fig. 10. Incidentally, the conversion expression serves to convert " coordinates of pre-conversion working points", which are set in advance in the second step in the flow chart shown in Fig. 12, into "coordinates of post-conversion working points ", that is, coordinates, which reflect the layout of workpiece or the like in the actual system and generally has a matrix of 4 rows and 4 columns as shown below.

$$\begin{bmatrix} A2 \\ O2 \\ N2 \\ D2 \end{bmatrix} \quad \begin{bmatrix} Ax & Ox & Nx & dx \\ Ay & Oy & Ny & dy \\ Az & Oz & Nz & dz \\ 0 & 0 & 0 & 1 \end{bmatrix} \quad \begin{bmatrix} A1 \\ O1 \\ N1 \\ D1 \end{bmatrix}$$

Coordinates of post-conversion working points

Coordinate conversion expression

Coordinates of pre-conversion working points

In the above matrix, specific values of matrix elements Ax, Ox, ... dz may be determined by calibrating a model whose layout information is known.

A description will now be given of a third embodiment according to the present invention.

As described above, the layout of the robot, the peripheral equipment and the workpiece on the screen of the simulation apparatus may be matched with the layout of the corresponding components in the actual system. If an operator changes the robot working points or operating points by referring to the relative positional relation between the robot and the peripheral equipment or the workpiece on the screen of the simulation apparatus, then the simulation apparatus calculates the change amount of the robot working points or operating points in the coordinate system of the robot and gives the actual robot an instructions equivalent to the change amount, thereby enabling the operator move the robot as he likes by using the screen of the simulation apparatus.

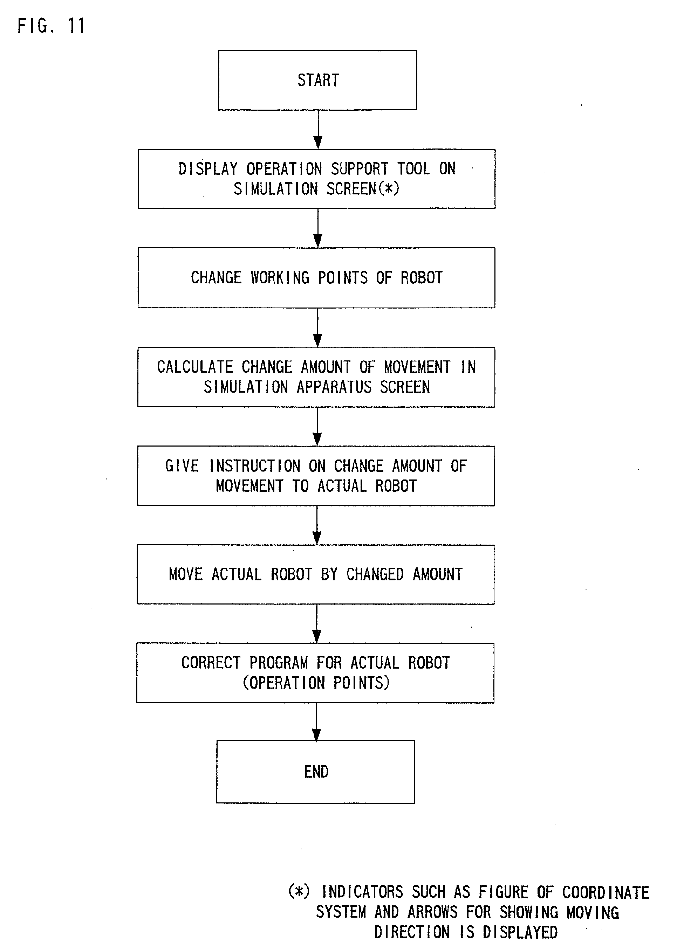

In this way, robot operation on the screen of the simulation apparatus can be easily changed with the help of the coordinate system and indicators such as arrow displayed on the screen. The procedure as described above may be summarized in a flow chart shown in Fig. 11.

According to the above embodiments, the simulation apparatus allows the three-dimensional models of the peripheral equipment, the workpiece and the like, required for the off-line programming, to be corrected through the support of the sensor easily in a short period of time. Further, the simulation apparatus also allows the operation of the working machine such as the robot to be accurately matched to that of the peripheral objects.

In addition, change of the operation of the model of the working machine such as the robot on the screen for three-dimensional modeling prepared by the off-line programming may cause direct modification of the movement of the actual robot or the like or the program thereof. The simulation apparatus displays on the screen the indicators or the like, thereby allowing easy modification of an operation on-line.

**Claims**

1. A simulation apparatus for performing a simulation of an actual system by combining a three-dimensional model of a working machine such as a robot and a machine tool with a three- dimensional model of a peripheral equipment or a workpiece placed on the periphery of said working machine to display the combination of said three-dimensional models in the form of animation on a screen of said simulation apparatus, comprising:

   means for disposing said three-dimensional models on said screen;
   means for detecting, through a sensor, each of positions of the actual peripheral equipment or workpiece, which correspond to one or more feature portions of any three-dimensional model disposed on said screen;

means for calculating a relative positional relation between said working machine and said peripheral equipment or workpiece on the basis of each of the detected corresponding positions; and
means for correcting the layout of said models on said screen on the basis of the calculated relative positional relation.

2. A simulation apparatus for performing a simulation of an actual system by combining a three-dimensional model of a working machine such as a robot and a machine tool with a three- dimensional model of a peripheral equipment or workpiece placed on the periphery of said working machine to display the combination of said three-dimensional models in the form of animation on a screen of said simulation apparatus, comprising:

means for disposing said three-dimensional models on said screen;
a sensor mounted to said working machine;
means for moving said working machine to such a position that each of positions of the actual peripheral equipment or workpiece, which correspond to one or more feature portions of any three-dimensional model disposed on said screen, can be captured by said sensor, thereby detecting each of said corresponding positions by said sensor;
means for calculating a relative positional relation between said working machine and said peripheral equipment or workpiece on the basis of each of the detected corresponding positions; and
means for correcting the layout of said three-dimensional models on said screen on the basis of the calculated relative positional relation.

3. The simulation apparatus according to claim 1 or 2, wherein said simulation apparatus further comprises means for adjusting working point array information of said working machine on the basis of said calculated relative positional relation to thereby cause the working points of the program for said working machine to correspond to those of the actual peripheral equipment or workpiece.

4. The simulation apparatus according to claim 1, 2 or 3, wherein said simulation apparatus further comprises mean by which a change of operation or addition/change of working points of said working machine on the screen of said simulation apparatus is linked with a change of the operation or addition/change of working points of the actual working machine.

5. The simulation apparatus according to claim 4, wherein said screen of said simulation apparatus displays a drawing for supporting the manipulation of said working machine to support the change of operation or addition/change of working points of said actual working machine.

6. The simulation apparatus according to any preceding claim, wherein said sensor is any one of a two-dimensional visual sensor, a three-dimensional visual sensor and a distance sensor.

FIG. 1

FIG. 2

```
┌──────────────────────────────┐
│            START             │
└──────────────────────────────┘
               │
               ▼
┌──────────────────────────────┐
│ PLACE ROBOT AND PERIPHERAL   │
│           OBJECTS            │
└──────────────────────────────┘
               │
               ▼
┌──────────────────────────────┐
│ USE SENSOR OR LIKE TO DETECT │
│ FEATURE POINTS OR FEATURE    │
│ SEGMENTS OF PERIPHERAL       │
│ OBJECTS                      │
└──────────────────────────────┘
               │
               ▼
┌──────────────────────────────┐
│ CALCULATE RELATIVE POSITIONAL│
│ RELATION BETWEEN ROBOT AND   │
│ PERIPHERAL OBJECTS           │
└──────────────────────────────┘
               │
               ▼
┌──────────────────────────────┐
│ CHANGE LAYOUT OF PERIPHERAL  │
│           OBJECTS            │
└──────────────────────────────┘
               │
               ▼
┌──────────────────────────────┐
│      SIMULATION OF ROBOT     │
└──────────────────────────────┘
               │
               ▼
┌──────────────────────────────┐
│             END              │
└──────────────────────────────┘
```

FIG. 3

(a)

(b)

EP 1 315 056 A2

FIG. 4

11

EP 1 315 056 A2

FIG. 5A

FIG. 5B

FIG. 6A

FIG. 6B

82

82a

82b

81

83

EP 1 315 056 A2

85

86

84

FIG. 7

EP 1 315 056 A2

114

100

113

140

101

150

118

119

120

ROBOT CONTROLLER

IMAGE PROCESSING UNIT

SENSOR CONTROL PART

FIG. 8

FIG. 9

FIG. 10

```
        ┌─────────────────────────┐
        │          START          │
        └─────────────────────────┘
                     │
                     ▼
    ┌─────────────────────────────────────┐
    │  PLACE ROBOT AND PERIPHERAL OBJECTS  │
    └─────────────────────────────────────┘
                     │
                     ▼
    ┌─────────────────────────────────────┐
    │  SET WORKING POINT ARRAY OF PERIPHERAL│
    │              OBJECTS                  │
    └─────────────────────────────────────┘
                     │
                     ▼
    ┌─────────────────────────────────────┐
    │  USE SENSOR OR LIKE TO DETECT FEATURE │
    │  POINTS AND FEATURE SEGMENTS OF PERIPHERAL│
    │              OBJECTS                  │
    └─────────────────────────────────────┘
                     │
                     ▼
    ┌─────────────────────────────────────┐
    │  CALCULATE RELATIVE POSITIONAL RELATION│
    │  BETWEEN ROBOT AND PERIPHERAL OBJECTS │
    └─────────────────────────────────────┘
                     │
                     ▼
    ┌─────────────────────────────────────┐
    │  CALCULATE COORDINATE CONVERSION      │
    │  EXPRESSION FOR WORKING POINT ARRAY   │
    └─────────────────────────────────────┘
                     │
                     ▼
    ┌─────────────────────────────────────┐
    │  USE COORDINATE CONVERSION EXPRESSION TO│
    │  CONVERT AND CORRECT WORKING POINT ARRAY│
    │         FOR ACTUAL SITE(*)            │
    └─────────────────────────────────────┘
                     │
                     ▼
    ┌─────────────────────────────────────┐
    │         SIMULATION OF ROBOT           │
    └─────────────────────────────────────┘
                     │
                     ▼
        ┌─────────────────────────┐
        │           END           │
        └─────────────────────────┘
```

(*)COORDINATE CONVERSION EXPRESSION MAY BE USED TO
CALCULATE TARGET POINTS OF ROBOT WHEN ROBOT IS OPERATED

FIG. 11

```
┌─────────────────────┐
│        START        │
└─────────────────────┘
           │
           ▼
┌─────────────────────────────────┐
│  DISPLAY OPERATION SUPPORT TOOL ON │
│      SIMULATION SCREEN(*)       │
└─────────────────────────────────┘
           │
           ▼
┌─────────────────────────────────┐
│   CHANGE WORKING POINTS OF ROBOT  │
└─────────────────────────────────┘
           │
           ▼
┌─────────────────────────────────┐
│  CALCULATE CHANGE AMOUNT OF MOVEMENT IN │
│     SIMULATION APPARATUS SCREEN   │
└─────────────────────────────────┘
           │
           ▼
┌─────────────────────────────────┐
│  GIVE INSTRUCTION ON CHANGE AMOUNT OF │
│      MOVEMENT TO ACTUAL ROBOT    │
└─────────────────────────────────┘
           │
           ▼
┌─────────────────────────────────┐
│  MOVE ACTUAL ROBOT BY CHANGED AMOUNT │
└─────────────────────────────────┘
           │
           ▼
┌─────────────────────────────────┐
│  CORRECT PROGRAM FOR ACTUAL ROBOT │
│       (OPERATION POINTS)        │
└─────────────────────────────────┘
           │
           ▼
┌─────────────────────┐
│         END         │
└─────────────────────┘
```

(*) INDICATORS SUCH AS FIGURE OF COORDINATE
SYSTEM AND ARROWS FOR SHOWING MOVING
DIRECTION IS DISPLAYED